# FASCICULE DE BREVET EUROPEEN

(11) **EP 2 639 047 B1**
(45) Date de publication et mention de la délivrance du brevet: **01.10.2014**
(21) Numéro de dépôt: 13305260.5
(22) Date de dépôt: 07.03.2013
(51) Int. Cl.: B29C 70/34, B29D 99/00, B29C 53/08, B29C 33/40, B29L 31/30, B29L 31/00

(54) **Procédé de réalisation d'un profilé courbe en matériau composite à partir d'une préforme rectiligne de nappes de fibres**
Herstellungsverfahren eines gebogenen Profils aus Verbundmaterial ausgehend von einer geraden Vorform aus Fasermatten
Method for producing a curved profile made of composite material from a rectilinear preform of fibre layers

(30) Priorité: 12.03.2012 FR 1252172
(43) Date de publication de la demande: 18.09.2013
(73) Titulaire: Airbus Opérations SAS, 31060 Toulouse (FR)
(72) Inventeur: De Mattia, Denis, 44115 BASSE GOULAINE (FR)
(74) Mandataire: Fantin, Laurent

(56) Documents cités:
- WO-A2-2009/037647
- FR-A1- 2 928 294
- FR-A1- 2 928 295

## Description

La présente invention se rapporte à un procédé de réalisation d'un profilé courbe en matériau composite à partir d'une préforme rectiligne de nappes de fibres. L'invention concerne plus particulièrement un procédé de réalisation d'un cadre d'un fuselage d'un aéronef.

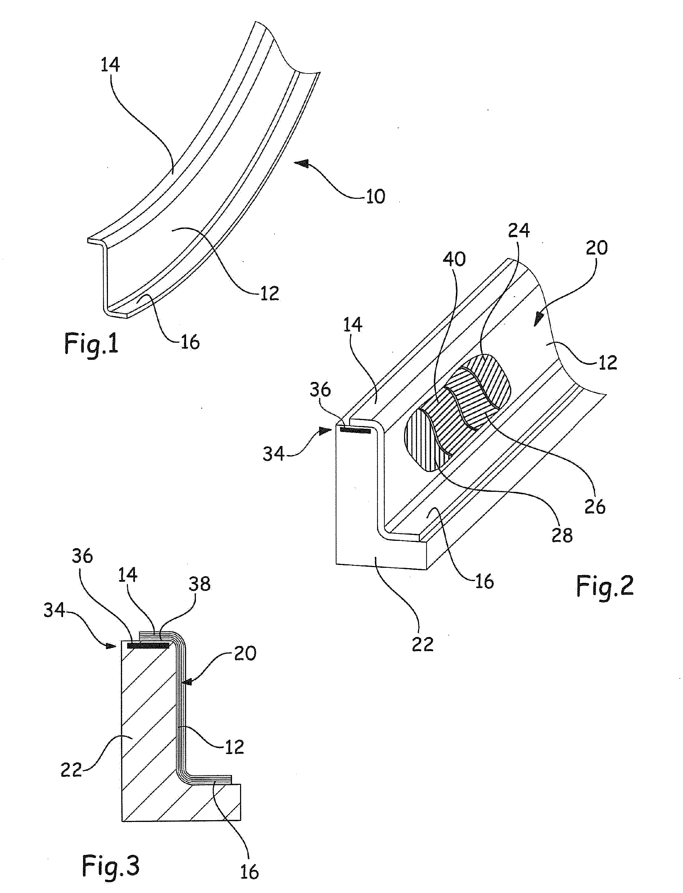

Selon un mode de réalisation illustré sur la figure 1, un cadre de fuselage 10 se présente sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Un procédé de réalisation d'un tel cadre en matériau composite est décrit dans le document FR-2.928.295.

Selon ce document, on réalise dans un premier temps une bande sensiblement rectangulaire à partir d'un empilage de trois nappes de fibres pré-imprégnées, chaque nappe ayant des fibres orientées selon une direction, la bande comportant des nappes avec des orientations de fibres différentes, une nappe avec des fibres à 30°, une nappe avec des fibres à 90° et une autre nappe avec des fibres à 150°.

Dans un second temps, la bande de nappes de fibres est disposée sur un mandrin en matériau déformable puis comprimée sur ce mandrin de manière à épouser sa forme.

Le mandrin déformable est susceptible de se déformer entre une position rectiligne et une position courbe mais a une section transversale incompressible ou quasi incompressible.

En suivant, la bande déformée disposée sur le mandrin en matériau déformable est mise en contact contre un outillage chauffé présentant en périphérie des sections radiales avec un profil complémentaire aux sections transversales du mandrin. Ainsi lors du cintrage, la bande est comprimée et subit une augmentation de température.

Suite à la mise en place de cette première bande, on découpe une deuxième bande de trois nappes de fibres pré-imprégnées pour la disposer sur un autre mandrin déformable puis la comprimer sur ce dernier.

En suivant, cette deuxième bande déformée sur son mandrin en matériau déformable est mise en contact contre la première bande toujours en place sur l'outillage puis comprimée contre la première bande.

Pour obtenir un cadre, il est nécessaire de rapporter comme précédemment plusieurs bandes les unes sur les autres, avant de polymériser l'ensemble ainsi formé.

En complément, des nappes avec des fibres orientées à 0 peuvent être rajoutées manuellement entre certaines bandes.

Ce mode opératoire n'est pas pleinement satisfaisant pour les raisons suivantes : En premier lieu, la mise en oeuvre est relativement longue et fastidieuse du fait que le profilé est réalisé pas à pas, un grand nombre de bandes devant être déformées et cintrées successivement.

En second lieu, le positionnement relatif entre les bandes s'avère difficile à réaliser car les bandes sont constituées de fibres pré-imprégnées et peuvent difficilement glisser l'une par rapport à l'autre pour corriger leur position relative. Aussi, il est difficile de garantir que lors du cintrage les deux ailes intérieures des deux bandes, les deux âmes des deux bandes et les deux ailes extérieures des deux bandes soient parfaitement en contact les unes avec les autres sur toute la longueur du cadre. Compte tenu de ces difficultés de mise en place, les opérateurs doivent intervenir à de nombreuses reprises pour tenter de corriger manuellement les défauts constatés.

Selon une autre problématique, au fur et à mesure de l'empilement des bandes, les rayons externes augmentent de valeur alors que les rayons internes diminuent si bien que l'écart de valeur entre la bande déjà en place sur l'outillage de cintrage et la bande rapportée conduit à un défaut appelé pontage, les deux bandes n'étant pas intimement plaquées l'une contre l'autre en fond de rayon de courbure. Ce défaut va provoquer lors de la polymérisation des ondulations préjudiciables pour la qualité de la pièce.

Selon une autre problématique, il est impossible de cintrer les bandes après leurs compactages sans provoquer un glissement entre les nappes de fibres pré-imprégnées et de la sorte des ondulations ou des plissements de fibres.

Enfin, les nappes de la première bande restent en contact avec l'outillage chauffé à une température de l'ordre de 50°C bien plus longtemps que les nappes de la dernière bande rapportée, ce qui induit un vieillissement accéléré et non maitrisé de la résine imprégnant les premières nappes.

Aussi, la présente invention vise à remédier aux inconvénients de l'art antérieur en proposant un procédé de réalisation d'un profilé courbe en matériau composite à partir d'une préforme rectiligne de nappes de fibres permettant de réduire le temps et les coûts de réalisation tout en limitant les risques de rebut de la pièce ainsi réalisée.

A cet effet, l'invention a pour objet un procédé de réalisation d'un profilé courbe à partir d'une préforme rectiligne de nappes de fibres pré-imprégnées, ledit procédé consistant à empiler des nappes sur un mandrin déformable et à enrouler ledit mandrin déformable et les nappes empilées sur un outillage de cintrage selon un axe de rotation, ledit profilé comprenant un empilage de N nappes, au moins une première section du profilé étant disposée dans un plan perpendiculaire à l'axe de rotation et au moins une deuxième section parallèle à l'axe, ledit procédé consistant à empiler les N nappes de fibres sur le mandrin déformable, à cintrer en une seule phase les N nappes intercalées entre le mandrin déformable et l'outillage de cintrage et à polymériser lesdites N nappes cintrées, ledit profilé courbe comprenant M nappes avec des fibres orientées à A° et M +/-5% nappes avec des fibres orientées à -A°.

D'autres caractéristiques et avantages ressortiront de la description qui va suivre de t'invention, description donnée à titre d'exemple uniquement, en regard des dessins annexés sur lesquels :
- La figure 1 est une vue en perspective d'une portion d'un cadre d'un fuselage d'un aéronef,
- La figure 2 est une vue en perspective d'un empilage de nappes sur un mandrin déformable rectiligne avec un arrachement permettant d'illustrer l'orientation des fibres des nappes empilées,
- La figure 3 est une coupe transversale de l'empilage de nappes de fibres et du mandrin de la figure 2,
- La figure 4 est une représentation schématique d'un outillage de cintrage utilisé pour courber l'empilage de nappes et le mandrin de la figure 2,
- La figure 5 est une illustration de l'orientation de certaines fibres avant le cintrage,
- La figure 6A est une illustration de l'orientation des mêmes fibres que la figure 5 après l'opération de cintrage selon une première variante de l'invention, et
- La figure 6B est une illustration de l'orientation des mêmes fibres que la figure 5 après l'opération de cintrage selon une autre variante de l'invention.

Sur la figure 1, on a représenté un cadre de fuselage 10 sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Pour donner un ordre de grandeur, l'âme a une hauteur de 80 mm, une épaisseur de l'ordre de 4 à 6 mm. Les ailes ont une largeur de l'ordre de 30 mm. L'invention n'est pas limitée à cette forme de section et à cette application. Ainsi, l'invention peut permettre d'obtenir différents profilés courbes avec une section en J, en Z, en L, en Oméga ou autre.

Selon l'invention, le profilé 10 est courbé selon un axe de rotation X et un rayon de courbure R. Ainsi, le profilé courbe 10 comprend au moins une première section, plus particulièrement l'âme 12, dans un plan perpendiculaire à l'axe de rotation X et au moins une deuxième section, plus particulièrement l'aile 14, parallèle à l'axe X. Les différentes sections du profilé sont reliées entre elles par des sections courbes. Ainsi, une première surface d'une première section est continue avec une première surface de chaque autre section. Ces premières surfaces forment une surface dite par la suite surface extérieure. De la même manière, une seconde surface de la première section est continue avec une seconde surface de chaque autre section. Ces secondes surfaces forment une surface dite par la suite surface intérieure. Cette dernière comprend des parties orientées vers l'axe de rotation X.

Selon l'invention, le profilé courbe 10 comprend un empilage de N nappes, N étant un entier supérieur à dix nappes. Pour donner un ordre de grandeur, le profilé comprend une cinquantaine de nappes.

Les nappes comprennent des fibres pré-imprégnées orientées pour chaque nappe selon une direction.

Ce profilé courbe est obtenu à partir d'une préforme rectiligne 20 ayant des sections transversales identiques à celles du profilé courbe 10 à obtenir.

On entend par direction longitudinale la plus grande dimension de la préforme rectiligne. Un plan transversal est un plan perpendiculaire à la direction longitudinale.

La préforme rectiligne 20 est obtenue par l'empilage des N nappes nécessaires pour former le profilé courbe sur un mandrin déformable 22.

Par déformable, on entend que le mandrin peut se déformer entre une position rectiligne et une position courbe mais a une section transversale incompressible ou quasi incompressible.

Selon un mode de réalisation, le mandrin est en élastomère.

Le mandrin déformable 22 comprend une section complémentaire à celle du profilé courbe.

Les N nappes du profilé courbe sont empilées les unes sur les autres, la première nappe déposée sur le mandrin formant la surface extérieure du profilé et la dernière nappe déposée formant la surface intérieure du profilé.

Comme illustré sur la figure 2, certaines nappes 24 peuvent avoir des fibres orientées à A° par rapport à la direction longitudinale et d'autres nappes 26 peuvent avoir des fibres orientées à -A° par rapport à la direction longitudinale, a pouvant varier de 10 à 90°.

Les valeurs A sont déterminées en fonction des caractéristiques mécaniques recherchées. Ces valeurs A sont déterminées par le bureau d'étude et doivent respecter un intervalle de tolérance de +/-3°. Ainsi, lorsque la valeur A nominale de l'orientation est de 30°, les fibres doivent former un angle avec la direction longitudinale compris entre 27° et 33°.

A titre d'exemple, certaines nappes peuvent avoir des fibres orientées à 30° et d'autres nappes des fibres orientées à -30°. Certaines nappes peuvent avoir des fibres orientées à 60° et d'autres nappes des fibres orientées à -60°. Certaines nappes 28 peuvent avoir des fibres orientées à 90°.

Selon un point important de l'invention, pour chaque valeur de A, le profilé courbe comprend autant de nappes avec des fibres orientées à A° que de nappes avec des fibres orientées à -A°. Lorsque le profilé courbe 10 comprend un empilage de 10 à 20 nappes, il peut comprendre M' nappes avec des fibres orientées à A° et M' +/-1 nappes avec des fibres orientées à -A°. Au-delà de 20 nappes, le profilé peut comprendre M nappes avec des fibres orientées à A° et M +/-5% nappes avec des fibres orientées à -A°.

Avantageusement, une nappe avec des fibres orientées à A° est adjacente à une nappe avec des fibres orientées à -A°.

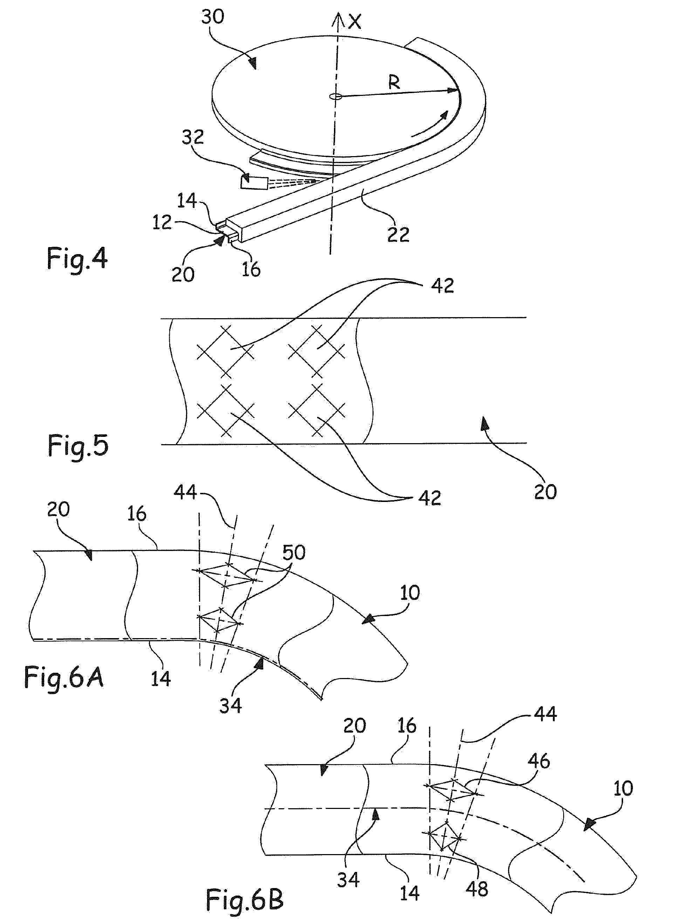

Lorsque toutes les nappes du profilé courbe 10 sont rapportées sur le mandrin déformable 22, on opère une phase de cintrage en utilisant un outillage de cintrage 30 présentant des sections complémentaires aux sections de la surface intérieure du profilé courbe. Lors de la phase de cintrage, le mandrin et toutes les nappes sont enroulés sur l'outillage de cintrage 30, comme illustré sur la figure 4.

Au moins la zone de déformation de la préforme rectiligne 20 est portée à une température de l'ordre de 70°C. Selon un mode de réalisation, l'outillage de cintrage 30 comprend des moyens de chauffage intégrés permettant de chauffer la surface de l'outillage en contact avec les nappes. Selon un autre mode de réalisation préféré, des moyens de chauffage 32 sont prévus à l'extérieur de l'outillage de cintrage et permettent de chauffer les nappes uniquement dans la zone de déformation.

La vitesse linéique de cintrage est fonction notamment de la capacité des moyens de chauffage à chauffer la section de la préforme rectiligne soumise au cintrage. A titre d'exemple, la vitesse linéique est supérieure ou égale à 1,5 mm/s.

L'outillage de cintrage n'est pas plus décrit car il peut être identique à l'outillage de l'art antérieur moyennant quelques modifications mineures.

Avantageusement, le mandrin déformable 22 comprend une fibre neutre 34, la plus proche possible de l'aile intérieure 14. En pratique, le mandrin déformable 22 comprend un renfort rendant le mandrin inextensible selon la direction longitudinale au droit du renfort, sous forme d'une lame 36 qui s'étend selon la direction longitudinale, sur toute la longueur du mandrin, la section de la lame 36 étant orientée de manière à ce que la longueur de la section soit orientée parallèlement à une aile du profilé courbe.

Le profilé courbe 10 peut comprendre des nappes 40 avec des fibres orientées à 0°, parallèle à la direction longitudinale. Dans ce cas, ces nappes 40 peuvent ne pas s'étendre sur toute la largeur de la préforme mais seulement sur la zone correspondant à l'aile extérieure 16. Dans tous les cas, il est préférable de déposer les nappes avec des fibres à 0° seulement sur les zones prévues à l'extérieur de la fibre neutre 34. Ainsi, lors de l'opération de cintrage les fibres à 0° ne subissent que des efforts de traction et aucun effort de compression susceptible d'engendrer des plissements.

De préférence, le renfort doit être disposé le plus proche possible de l'axe de rotation X. Selon un mode de réalisation, la lame 36 est séparée d'une faible distance, de l'ordre du millimètre, de la surface 38 du mandrin en contact avec l'aile intérieure 14.

Ainsi, lorsque la fibre neutre 34 est disposée à proximité de l'aile intérieure 14, la ou les nappes avec des fibres orientées à 0° peuvent s'étendre sur toute la largeur du profilé, même au niveau de l'aile intérieure 14.

L'opération de cintrage de toutes les nappes lors d'une seule et même opération de cintrage est possible du fait d'un nombre identique ou quasi identique de nappes avec des fibres orientées à A° et de nappes avec des fibres orientées à - A°.

Les fibres orientées à A° forment avec les fibres orientées à -A° des losanges élémentaires 42 tous identiques lorsque la préforme est rectiligne comme illustré sur la figure 5. Après déformation, les losanges élémentaires sont toujours symétriques par rapport à une direction radiale 44. Lors de la déformation, les points d'intersections des fibres A° et -A° agissent comme des noeuds au niveau desquels pivotent les fibres. Ainsi, les nappes avec des fibres orientées à A° et celles avec des fibres orientées à -A° se déforment sans plissement.

Selon un mode de réalisation illustré sur la figure 6B, lorsque la fibre neutre 34 est disposée entre les deux ailes 14 et 16, tous les losanges élémentaires se déforment de manière symétrique par rapport à des directions radiales 44. Toutefois, les losanges élémentaires 46 situés entre la fibre neutre 34 et l'aile extérieure 16 s'étirent selon une direction perpendiculaire à la direction radiale. A contrario, les losanges élémentaires 48 situés entre la fibre neutre 34 et l'aile intérieure 14 s'étirent selon la direction radiale mais se réduisent selon la direction perpendiculaire à la direction radiale. Même si les déformations sont symétriques par rapport aux directions radiales 44, les losanges élémentaires 46 s'étirent de manière plus importante que les losanges élémentaires 48. Par conséquent, pour limiter les risques de plissement à proximité de l'aile intérieure 14, il est préférable de rapprocher la fibre neutre 34 de l'aile intérieure 14. Selon un mode de réalisation préféré et illustré sur la figure 6A, lorsque la fibre neutre 34 est disposée au niveau de l'aile intérieure 14, tous les losanges élémentaires 50 s'étirent selon une direction perpendiculaire à la direction radiale. Dans ce cas, toutes les fibres sont soumises à un effort de traction et aucun plissement n'est possible.

Comme illustré sur la figure 6A, l'orientation des fibres orientées à A° et -A° dans la préforme rectiligne est modifiée après le cintrage.

Ainsi, l'angle formé par les fibres orientées initialement à A° diminue en fonction de l'éloignement de l'axe de rotation X alors que celui formé par les fibres orientées initialement à -A° augmente en fonction de l'éloignement de l'axe de rotation X.

Compte tenu de l'intervalle de tolérance +/-IT fixé par le bureau d'étude de l'ordre de +/- 3°, les fibres censées être orientées à A° seront positionnées à A+IT° avant le cintrage et les fibres censées être orientées à -A° seront positionnées à -(A+IT)° avant le cintrage. Selon cet agencement après la phase de cintrage, toutes les fibres sont orientées correctement et forment un angle de +A +/-IT ou de -A +/-IT. Cet agencement permet d'augmenter significativement la hauteur de l'âme. A titre d'exemple, la hauteur de l'âme était limitée à approximativement 80 mm pour l'art antérieur alors qu'elle peut atteindre approximativement 170 mm pour l'invention.

Lorsque A = 30° et que l'intervalle de tolérance est de +/- 3°, avant déformation, les fibres de certaines nappes sont orientées à +33° alors que les fibres d'autres nappes sont orientées à -33°. Dans ce cas, après cintrage, toutes les fibres sont correctement orientées et respectent l'intervalle de tolérance. Ainsi, pour certaines nappes, les fibres proches de l'aile intérieure 14 sont orientées à 33° et les fibres proches de l'aile extérieure 16 sont orientées à 27° et respectent toutes l'orientation de 30° +/-3°.

Après la phase de cintrage, les nappes cintrées sont polymérisées. Selon un mode de réalisation, on peut retirer le mandrin déformable et appliquer une vessie au-dessus de la préforme cintrée pour exercer une pression sur les nappes lors du cycle de température. En variante, la vessie peut être rapportée au-dessus du mandrin lors de la phase de polymérisation, le mandrin assurant la fonction de plaque pour conformer la surface extérieure du profilé courbe.

Le procédé de l'invention procure les avantages suivants :
En premier lieu, le procédé permet de réduire fortement les coûts et le temps de réalisation dans la mesure où toutes les nappes sont cintrées en une seule phase et non pas selon un procédé pas à pas.
En second lieu, le procédé de l'invention permet de limiter les rebuts en raison de l'absence de plissement ou de pontage au niveau des rayons de courbure.
Selon un autre avantage, il est possible de réaliser des profilés avec des âmes de plus grandes dimensions.
Enfin, le procédé assure une meilleure maîtrise du vieillissement de la résine dans la mesure où seule la portion déformée subit une élévation de température.

## Revendications

1. Procédé de réalisation d'un profilé courbe à partir d'une préforme rectiligne de nappes de fibres pré-imprégnées, ledit procédé consistant à empiler des nappes sur un mandrin déformable (22) et à enrouler ledit mandrin déformable (22) et les nappes empilées sur un outillage de cintrage (30) selon un axe de rotation (X), ledit profilé (10) comprenant un empilage de N nappes, au moins une première section (12) du profilé étant disposée dans un plan perpendiculaire à l'axe de rotation (X) et au moins une deuxième section (14, 16) parallèle à l'axe (X), ledit procédé consistant à empiler les N nappes de fibres sur le mandrin déformable (22), à cintrer en une seule phase les N nappes intercalées entre le mandrin déformable (22) et l'outillage de cintrage (30) et à polymériser lesdites N nappes cintrées, ledit profilé courbe comprenant M nappes avec des fibres orientées à A° et M +/-5% nappes avec des fibres orientées à -Ao.

2. Procédé selon la revendication 1, **caractérisé en ce que** lorsque le profilé courbe (10) comprend un empilage de 10 à20 nappes, il comprend M' nappes avec des fibres orientées à A° et M' +/-1 nappes avec des fibres orientées à -A°.

3. Procédé selon la revendication 1 ou 2, **caractérisé en ce qu'**une nappe avec des fibres orientées à A° est adjacente à une nappe avec des fibres orientées à -A°.

4. Procédé selon l'une quelconque des revendications précédentes, **caractérisé en ce qu'il** consiste à chauffer les nappes lors du cintrage uniquement dans la zone de déformation.

5. Procédé selon la revendication 4, **caractérisé en ce qu'il** consiste à chauffer les nappes dans la zone de déformation à une température de l'ordre de 70°C.

6. Procédé selon l'une quelconque des revendications précédentes, **caractérisé en ce qu'**il consiste à utiliser un mandrin déformable avec un renfort (36) rendant le mandrin inextensible selon la direction longitudinale au droit du renfort.

7. Procédé selon la revendication 6, **caractérisé en ce qu'**il consiste à utiliser un mandrin déformable avec un renfort (36) disposé le plus proche possible de l'axe de rotation (X).

8. Procédé selon l'une quelconque des revendications précédentes, ledit profilé comportant une nappe avec des fibres censées être orientées à A° avec un intervalle de tolérance de +/- IT, **caractérisé en ce que** lesdites fibres censées être orientées à A° sont positionnées à A+IT° avant le cintrage.

9. Procédé selon l'une quelconque des revendications précédentes, ledit profilé comportant une nappe avec des fibres censées être orientées à -A° avec un intervalle de tolérance de +/- IT, **caractérisé en ce que** lesdites fibres censées être orientées à -A° sont positionnées à -(A+IT)° avant le cintrage.

10. Procédé selon l'une quelconque des revendications précédentes, **caractérisé en ce que** la vitesse linéique de cintrage est supérieure ou égale à 1,5 mm/s.

## Patentansprüche

1. Verfahren zur Herstellung eines gebogenen Profils ausgehend von einer geraden Vorform aus Lagen von vorimprägnierten Fasern, wobei das Verfahren darin besteht, die Lagen auf einem verformbaren Kern (22) aufzuschichten und den verformbaren Kern (22) mit den aufgeschichteten Lagen auf ein Biegewerkzeug (30) um eine Drehachse (X) aufzurollen, wobei das Profil (10) eine Aufschichtung von N Lagen aufweist und wobei weinigstens ein erster Abschnitt (12) des Profils in einer im rechten Winkel zur Drehachse (X) ausgerichteten Ebene und wenigstens ein zweiter Abschnitt (14, 16) parallel zur Achse (X) angeordnet sind, wobei das Verfahren darin besteht, die N Lagen der Faser auf den verformbaren Kern (22) aufzuschichten und in einem Arbeitsgang die zwischen dem verformbaren Kern (22) und dem Biegewerkzeug (30) eingebrachten N Lagen zu biegen und die gebogenen N Lagen zu polymerisieren, wobei das gebogene Profil M Lagen mit im Winkel A° ausgerichteten Fasern und M +/-5% Lagen mit im Winkel -A° ausgerichteten Fasern aufweist.

2. Verfahren nach Anspruch 1, **dadurch gekennzeichnet, dass** das Profil M Lagen mit im Winkel A° ausgerichteten Fasern und M'+/-1 Lagen mit im Winkel -A° ausgerichteten Fasern aufweist, wenn das gebogene Profil (10) eine Aufschichtung von 10 bis 20 Lagen aufweist.

3. Verfahren nach Anspruch 1 oder 2, **dadurch gekennzeichnet, dass** eine Lage mit im Winkel A° ausgerichteten Fasern neben einer Lage mit im Winkel -A° ausgerichteten Fasern liegt.

4. Verfahren nach einem der vorhergehenden Ansprüchen, **dadurch gekennzeichnet, dass** dieses darin besteht, die Lagen beim Biegen ausschließlich in dem Verformungsbereich zu erwärmen.

5. Verfahren nach Anspruch 4, **dadurch gekennzeichnet, dass** dieses darin besteht, die Lagen im Verformungsbereich auf eine Temperatur in der Größenordnung von 70°C aufzuheizen.

6. Verfahren nach einem der vorhergehenden Ansprüche, **dadurch gekennzeichnet, dass** dieses darin besteht, einen verformbaren Kern mit einer Verstärkung (36) zu verwenden, die den Kern am Ort der Verstärkung in Längsrichtung undehnbar macht.

7. Verfahren nach Anspruch 6, **dadurch gekennzeichnet, dass** dieses darin besteht, einen verformbaren Kern mit einer Verstärkung (36) zu verwenden, die so nah wie moglich an der Drehachse (X) angeordnet ist.

8. Verfahren nach einem der vorhergehenden Ansprüche, wobei das Profil eine Lage aufweist, deren Fasern im Winkel A° mit einem Toleranzbereich von +/-IT, ausgerichtet sein sollen, **dadurch gekennzeichnet, dass** die Fasern, die im Winkel A° ausgerichtet sein sollen, vor dem Biegevorgang im Winkel A+IT° angeordnet sind.

9. Verfahren nach einem der vorhergehenden Ansprüche, wobei das Profil eine Lage aufweist, deren Fasern im Winkel -A° mit einem Toleranzbereich +/-IT angeordnet sein sollten, **dadurch gekennzeichnet, dass** die Fasern, die im Winkel -A° angeordnet sein sollen, vor dem Biegevorgang im Wickel - (A+IT)° angeordnet sind.

10. Verfahren nach einem der vorhergehenden Ansprüche, **dadurch gekennzeichnet, dass** die lineare Geschwindigkeit des Biegevorgangs größer oder gleich 1,5 mm pro Sekunde ist.

## Claims

1. Method of manufacturing a curved profile from a rectilinear preform of pre-impregnated fiber plies, said method consisting of stacking plies on a deformable mandrel (22) and of winding said deformable mandrel (22) and the stacked plies on a bending tool (30) along a rotation axis (X), said profile (10) comprising a stack of N plies, at least one first section (12) of the profile being arranged along a plane perpendicular to the axis of rotation (X) and at least one second section (14, 16) parallel to the axis (X), said method consisting of stacking the N plies of fibers on the deformable mandrel (22), bending in a single step the N plies sandwiched between the deformable mandrel (22) and the bending tool (30) and of polymerizing said bent N plies, said curved profile comprising M plies with fibers oriented at A° and M +/-5% plies with fibers oriented at -A°.

2. Method according to claim 1, **characterized in that**, when the curved profile (10) comprises a stack of 10 to 20 plies, it comprises M' plies with fibers oriented at A° and M'+/-1 plies with fibers oriented at -A°.

3. Method according to claim 1 or 2, **characterized in that** a ply with fibers oriented at A° is adjacent to a ply with fibers oriented at -A°.

4. Method according to any of the previous claims, **characterized in that** it consists of heating the plies during bending only in the deformation zone.

5. Method according to claim 4, **characterized in that** it consists of heating the plies in the deformation zone at a temperature on the order of 70°C,

6. Method according to any of the previous claims, **characterized in that** it consists of using a deformable mandrel with a reinforcement (36) causing the mandrel to become inextensible along the longitudinal direction at the level of the reinforcement.

7. Method according to claim 6, **characterized in that** it consists of using a deformable mandrel with a reinforcement (36) arranged as close as possible to the axis of rotation (X).

8. Method according to any of the previous claims, said profile comprising a ply with fibers meant to be oriented at A° with a tolerance interval of +/-IT, **characterized in that** said fibers meant to be oriented at A° are positioned at A+IT° before bending.

9. Method according to any of the previous claims, said profile comprising a ply with fibers meant to be oriented at -A° with a tolerance interval of +/- IT, **characterized in that** said fibers meant to be oriented at -A° are positioned at -(A+IT)° before bending.

10. Method according to any of the previous claims, **characterized in that** the per unit length speed is greater than or equal to 1.5 mm/s.
